# EUROPEAN PATENT APPLICATION

(11) **EP 4 841 500 A1**
(43) Date of publication of application: **18.11.2026**
(21) Application number: 26178110.8
(22) Date of filing: 12.05.2026
(51) Int. Cl.: G06F 40/30, G06F 40/279

(54) **INFORMATION PROCESSING PROGRAM, INFORMATION PROCESSING METHOD, AND INFORMATION PROCESSING DEVICE**

(30) Priority: 16.05.2025 JP 2025082936
(71) Applicant: FUJITSU LIMITED, Kawasaki-shi, Kanagawa 211-8588 (JP)
(72) Inventor: MURATA, Kengo, Kawasaki-shi, Kanagawa, 211-8588 (JP); NAMIKI, Masanobu, Kawasaki-shi, Kanagawa, 211-8588 (JP); AOKI, Yasuhiro, Kawasaki-shi, Kanagawa, 211-8588 (JP); NAKAYAMA, Osafumi, Kawasaki-shi, Kanagawa, 211-8588 (JP)
(74) Representative: Hoffmann Eitle

(57) **Abstract**

An information processing program for causes a computer to execute a process including, acquiring a first document, generating a second document in which character information and a position of each piece of the character information included in the first document are represented by a plain text including a blank and a line feed, and inputting the generated second document to a machine learning model, and causing the machine learning model to extract predetermined character information.

## Description

### FIELD

The embodiments discussed herein are related to an information processing program, an information processing method, and an information processing device.

### BACKGROUND

In a business site, various document data such as meeting minutes are created. As a format of the document data, for example, a portable document format (PDF) or the like is used. In order to efficiently organize these document data, an information extraction technique for extracting specific information from the document data is often used. A large language model (LLM) can extract information with high accuracy when given a text group described in document data.

In the related art, as a technique of extracting information from a document, a technique of identifying and labeling semantically important text in a document using artificial intelligence, and extracting character information using a label and content has been proposed.

Patent Literature 1: Japanese Laid-open Patent Publication No. 2025-049847

However, when the character string to be extracted included in the document data is simply given to the LLM, the LLM does not recognize the position information about the character string, and thus, it is difficult to extract the character information according to the extraction condition defined by the description position in the document. For example, in a case where an instruction to extract a date described in the upper right of the sheet is received, when information other than the position for identifying the date is not sufficient, it is difficult for the LLM to distinguish the date in the upper right from the date in another position, and there is a possibility that the accuracy for extracting the character information is lowered.

In addition, in a technique of extracting character information using a label and content assigned to semantically important text in a document, it is difficult to sufficiently evaluate the position of a character because the information regarding the position of the character registered in the content is used. Therefore, even when this technique is used, there is a possibility that the accuracy for extracting information is lowered.

Accordingly, it is an object in one aspect of an embodiment of the invention to provide an information processing program, an information processing method, and an information processing device that improve the accuracy for extracting information.

### SUMMARY

According to an aspect of an embodiment, an information processing program for causing a computer to execute a process includes, acquiring a first document, generating a second document in which character information and a position of each piece of the character information included in the first document are represented by a plain text including a blank and a line feed, and inputting the generated second document to a machine learning model, and causing the machine learning model to extract predetermined character information.

### BRIEF DESCRIPTION OF DRAWINGS

FIG. 1 is a block diagram of an extraction device according to the first embodiment;
FIG. 2 is a diagram illustrating an example of a PDF document;
FIG. 3 is a diagram illustrating an example of a layout expression document;
FIG. 4 is a diagram illustrating a sample code used for conversion by pypdf;
FIG. 5 is a diagram illustrating an outline of a character information extraction process by an LLM according to the first embodiment;
FIG. 6 is a flowchart of a character string extraction process by an information processing device according to the first embodiment;
FIG. 7 is a diagram illustrating a comparative example of the extraction accuracy for extracting character information by the information processing device according to the first embodiment;
FIG. 8 is a block diagram of an information processing device according to the modification;
FIG. 9 is a diagram illustrating an outline of a character information extraction process by an LLM according to the modification;
FIG. 10 is a diagram illustrating an example of information input to an LLM according to the second embodiment;
FIG. 11 is a flowchart of a character string extraction process by an information processing device according to the second embodiment;
FIG. 12 is a diagram illustrating a comparative example of the extraction accuracy for extracting character information by the information processing device according to the second embodiment; and
FIG. 13 is a hardware configuration diagram of the information processing device.

### DESCRIPTION OF EMBODIMENTS

Preferred embodiments of the present invention will be explained with reference to accompanying drawings. Note that the information processing program, the information processing method, and the information processing device disclosed in the present application are not limited by the following embodiments.

### (a) First Embodiment

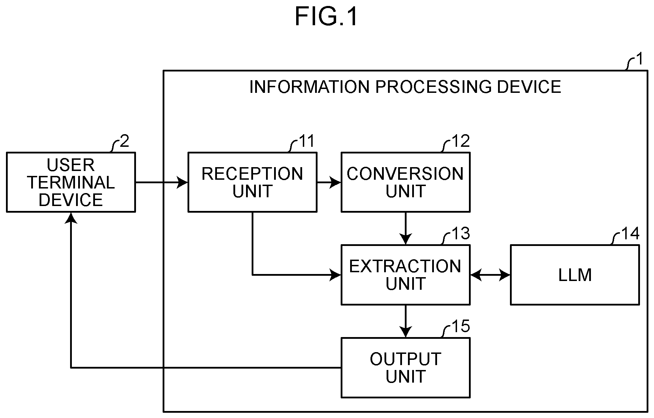

FIG. 1 is a block diagram of an extraction device according to the first embodiment. An information processing device 1 according to the present embodiment generates, from a PDF document, a layout document representing information about a layout of characters together with character information, inputs the layout document into the LLM, and causes the LLM to extract specific character information such as a date. As illustrated in FIG. 1, the information processing device 1 includes a reception unit 11, a conversion unit 12, an extraction unit 13, an LLM 14, and an output unit 15. Furthermore, a user terminal device 2 illustrated in FIG. 1 is an information processing device operated by a user, the information processing device causing the information processing device 1 to extract desired character information from a PDF document.

The reception unit 11 receives, from the user terminal device 2, a PDF document from which character information is to be extracted, a task description to be executed including an extraction condition of the character information, and an input/output case of character information extraction. Here, the input/output case is information of a combination of a reference PDF document as an example and an extraction result when extraction is performed from the reference PDF document according to a designated extraction condition. The number of input/output cases may be one or more. The inference accuracy of the LLM 14 is improved as the number of input/output cases is larger.

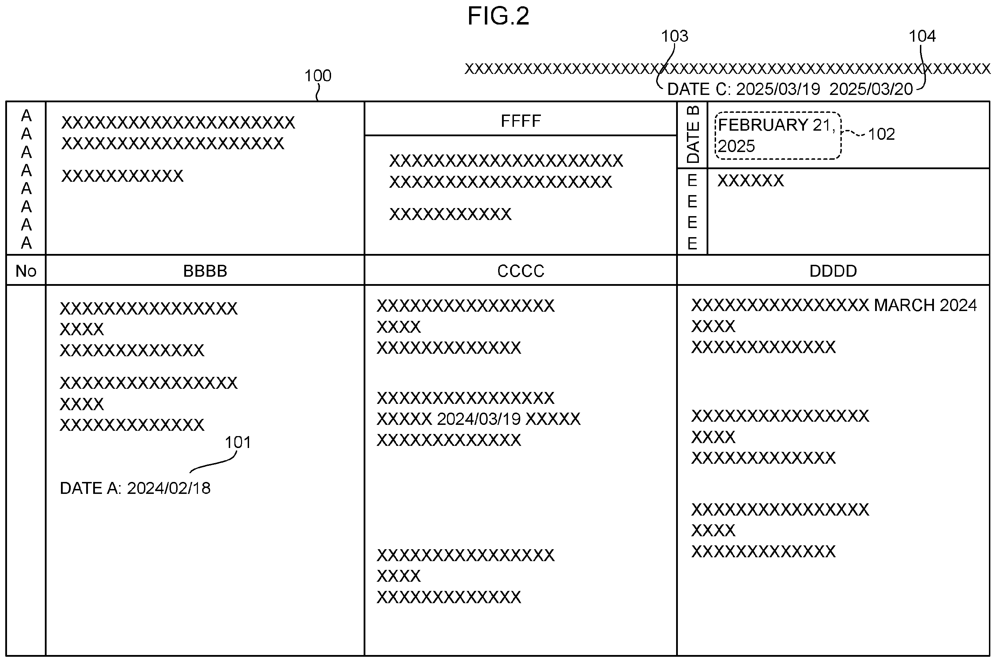

FIG. 2 is a diagram illustrating an example of a PDF document. For example, the reception unit 11 receives a PDF document 100. The PDF document 100 includes character information 101 indicating the date A, character information 102 indicating the date B, character information 103 indicating the date C, and character information 104 indicating the date D. The PDF document 100 may further include character information indicating a date. The PDF document 100 corresponds to an example of the "first document".

Here, in the character information 101 and 103, information indicating that the character information is the date A or the date C is assigned before the character information indicating the date. Furthermore, the character information 102 includes a field in which the date B is described, and character information indicating the date is registered in the field. That is, the character information 101 to 103 is character information that can be easily identified by information other than the position information.

On the other hand, in the character information 104, the date is registered in the upper right when viewing the sheet, that is, in the right shoulder of the PDF document 100, and information indicating the date D is not particularly assigned. That is, the character information 104 is character information in which the date D is identified by the position information that means the right shoulder of the PDF document 100. Hereinafter, extraction of character information for the PDF document 100 will be described.

Returning to FIG. 1, the description will be continued. The reception unit 11 outputs the PDF document 100 and the reference PDF document of the input/output case to the conversion unit 12. In addition, the reception unit 11 outputs the task description and the extraction result of the input/output case to the extraction unit 13. In this manner, the reception unit 11 acquires the PDF document 100, which is the first document.

The conversion unit 12 receives the PDF document 100 and the reference PDF document of the input/output case from the reception unit 11. Next, the conversion unit 12 analyzes the PDF document 100 to identify each piece of character information, an interval between respective pieces of character information, a position of each piece of character information in the up and down direction with respect to the PDF document 100, and the like. Then, the conversion unit 12 generates a layout expression document that is a plain text representing the character information and the layout of the characters in the PDF document 100, using a space and a line feed together with each piece of character information. Here, the plain text is, for example, text data that does not include position information about each piece of character information.

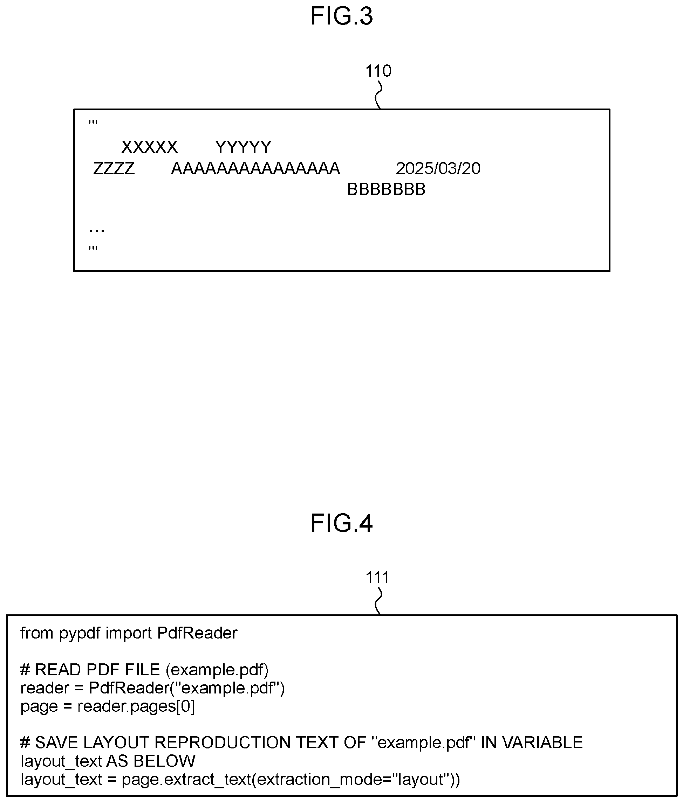

FIG. 3 is a diagram illustrating an example of a layout expression document. For example, the conversion unit 12 converts the PDF document 100 to generate a layout expression document 110.

In the layout expression document 110, a space having a length corresponding to an interval between characters in a lateral direction, that is, an interval between the character information in the PDF document 100 in a horizontal direction is disposed between the character information and the character information. Furthermore, the layout expression document 110 indicates a position of a character in a vertical direction, that is, a position of character information in the PDF document 100 the up and down direction by a line feed. In other words, the layout expression document 110 is data in which respective pieces of character information are disposed so that the position of the character information corresponding to one sheet of the PDF document 100 is represented when displayed on the screen. The layout expression document 110 corresponds to an example of the "second document".

For example, the conversion unit 12 can generate the layout expression document 110 from the PDF document 100 using pypdf that is an analysis tool of the PDF document. FIG. 4 is a diagram illustrating a sample code used for conversion by pypdf. A sample code 111 is an example of a code for converting a PDF document called example.pdf. The conversion unit 12 can acquire the layout expression document 110 by using a code in which the sample code 111 is applied to the PDF document 100. As described above, the conversion unit 12 generates the layout expression document 110 that is the second document in which the character information and the position of each piece of the character information included in the PDF document 100 that is the first document are represented by the plain text including the blank and the line feed. Specifically, the conversion unit 12 generates the second document so that an interval between character information in the first direction of the characters is indicated by a blank, and an interval in the second direction orthogonal to the first direction is indicated by a line feed. Here, the lateral direction of the character corresponds to an example of the "first direction", and the vertical direction of the character corresponds to an example of the "second direction".

Returning to FIG. 1, the description will be continued. As in the PDF document 100, the conversion unit 12 converts the reference PDF document to generate a layout expression document. Thereafter, the conversion unit 12 outputs, to the extraction unit 13, the generated layout expression document 110 and the layout expression document obtained by converting the reference PDF document.

The extraction unit 13 receives a task description and an extraction result of the input/output case from the reception unit 11. Furthermore, the extraction unit 13 receives the layout expression document 110 and the layout expression document obtained by converting the reference PDF document from the conversion unit 12.

Next, the extraction unit 13 associates the layout expression document obtained by converting the reference PDF document with the extraction result. Hereinafter, the layout expression document obtained by converting the associated reference PDF document and the extraction result are referred to as the "input/output case". Then, the extraction unit 13 inputs the task description, the layout expression document 110, and the input/output case to the LLM 14.

Thereafter, the extraction unit 13 acquires an extraction result including character information extracted from the layout expression document 110 according to the extraction condition by the LLM 14. For example, the extraction unit 13 acquires character information 101 to 104 indicating the dates A to D extracted from the layout expression document 110. Then, the extraction unit 13 outputs the acquired extraction result to the output unit 15.

In this manner, the extraction unit 13 inputs the layout expression document 110, which is the second document, to the LLM 14, which is the machine learning model, and causes the LLM 14 to extract predetermined character information. Here, the character information 101 to 104 indicating the dates A to D corresponds to an example of the "predetermined character information". Furthermore, the layout expression document obtained by converting the reference PDF document corresponds to an example of the "third document", and the extraction result of the input/output case corresponds to the "extraction result from the third document". That is, the extraction unit 13 inputs the input/output case including the layout expression document obtained by converting the reference PDF document, which is the third document, and the extraction result from the third document to the LLM 14, which is the machine learning model, together with the second document, and causes the LLM to perform inference.

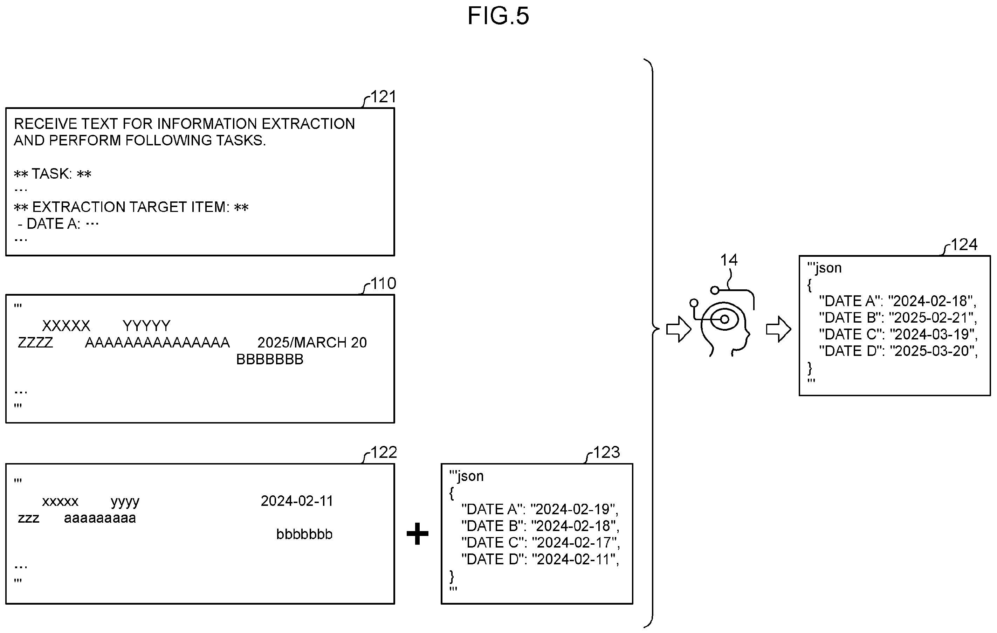

The LLM 14 is a machine learning model and is a large-scale language model subjected to general training. As the LLM 14, a general-purpose large-scale language model can be used. FIG. 5 is a diagram illustrating an outline of a character information extraction process by the LLM according to the first embodiment.

For example, the LLM 14 receives an input/output case including a task description 121, the layout expression document 110, a layout expression document 122 obtained by converting a reference PDF document, and an extraction result 123 from the extraction unit 13. The task description 121 includes, for example, an instruction to instruct extraction of a character string from the layout expression document 110 using the dates A to D as an extraction condition.

The LLM 14 refers to the layout expression document 122 and the extraction result 123 in the process of extracting character information, and extracts the character information from the layout expression document 110 according to the task description 121. For example, the LLM 14 extracts the character information 101 to 104 indicating the dates A to D included in the layout expression document 110. Thereafter, the LLM 14 outputs an extraction result 124 including the character information 101 to 104 indicating the dates A to D.

Here, the information processing device 1 of the present embodiment extracts the character information using the LLM 14, but other machine learning models can be used as long as the machine learning model can handle the character information. For example, the information processing device 1 may extract character information using a neural network such as a recurrent neural network (RNN) or a long short term memory (LSTM). Furthermore, in the present embodiment, the configuration in which the information processing device 1 includes the LLM 14 is described, but the present invention is not limited thereto, and the information processing device 1 may extract character information using an external LLM.

Returning to FIG. 1, the description will be continued. The output unit 15 receives, from the extraction unit 13, an extraction result including character information extracted from the layout expression document 110. Then, the output unit 15 outputs, to the user terminal device 2, the extraction result including the character information extracted from the layout expression document 110.

For example, the user requests the information processing device 1 to extract character information from the meeting minutes created as the PDF document 100, using the user terminal device 2. At this time, the user transmits, to the information processing device 1, a task description to be executed and an input/output case together with the PDF document 100, using the user terminal device 2.

Thereafter, the user can check the extraction result from the layout expression document 110 by the information processing device 1 using the user terminal device 2. By accumulating, in the user terminal device 2, the extraction result of the character information for each of the plurality of meeting minutes including the extraction result from the layout expression document 110, the user can efficiently organize the meeting minutes using the extraction result.

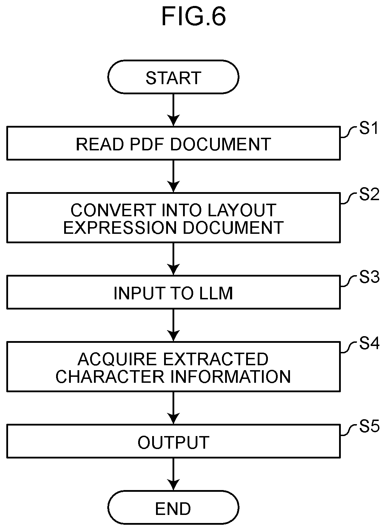

FIG. 6 is a flowchart of a character string extraction process by the information processing device according to the first embodiment. Next, a flow of the character string extraction process by the information processing device 1 according to the first embodiment will be described with reference to FIG. 6. Here, the information processing device 1 extracts character information from the PDF document 100 according to the task description 121 with reference to the layout expression document 122 and the extraction result 123 illustrated in FIG. 5.

The reception unit 11 receives the PDF document 100 from the user terminal device 2 and outputs the PDF document 100 to the conversion unit 12. At this time, the reception unit 11 also receives the task description 121 and the input/output case from the user terminal device 2. The conversion unit 12 reads the PDF document 100 input from the reception unit 11 (step S1).

The conversion unit 12 converts the read PDF document 100 into the layout expression document 110 including character information and layout information about each piece of the character information of the PDF document 100 (step S2). Further, the conversion unit 12 converts the reference PDF document of the input/output case into the layout expression document 122.

The extraction unit 13 inputs an input/output case including the task description 121, the layout expression document 110, the layout expression document 122, and the extraction result 123 to the LLM 14 (step S3).

Thereafter, the extraction unit 13 acquires character information extracted from the layout expression document 110 (step S4).

The output unit 15 outputs, to the user terminal device 2, the extraction result including the character information extracted from the layout expression document 110 (step S5).

Here, in the present embodiment, the extraction of character information from a PDF document is described as an example. However, the information processing device 1 can extract character information for documents in other data formats as long as the character information and the position of the character information can be acquired as digital information.

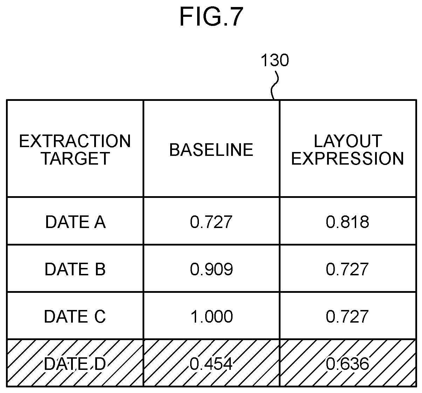

FIG. 7 is a diagram illustrating a comparative example of the extraction accuracy for extracting character information by the information processing device according to the first embodiment. Table 130 illustrates a comparison of the extraction accuracy of the extraction process of extracting character information 101 to 104 indicating the dates A to D from the PDF document 100. Each value in Table 130 indicates a correct answer rate in which a case where all are correct is set to 1.

The baseline in Table 130 indicates a process of extracting character information when a text group extracted from a PDF document not including position information is directly input to the LLM 14. Furthermore, the layout expression indicates a process of extracting character information by the information processing device 1 according to the first embodiment.

As illustrated in Table 130, the information processing device 1 converts the read PDF document 100 into the layout expression document 110 and causes the LLM 14 to extract the character information using the input/output case, so that the accuracy for extracting the date D defined by the description position is improved as compared with the baseline that does not use the position information.

As described above, the information processing device 1 according to the present embodiment generates the layout expression document 110 in which in the document, character information and the position of the character information are represented by plain text using a space and a line feed. Then, the information processing device 1 inputs the layout expression document 110 to the LLM 14 and causes the LLM to extract predetermined character information.

As a result, the LLM 14 can easily extract the character information according to the extraction condition defined by the description position in the document, that is, can easily extract the character information defined by the description position. Therefore, the information processing device 1 improves the accuracy for extracting information.

### Modification

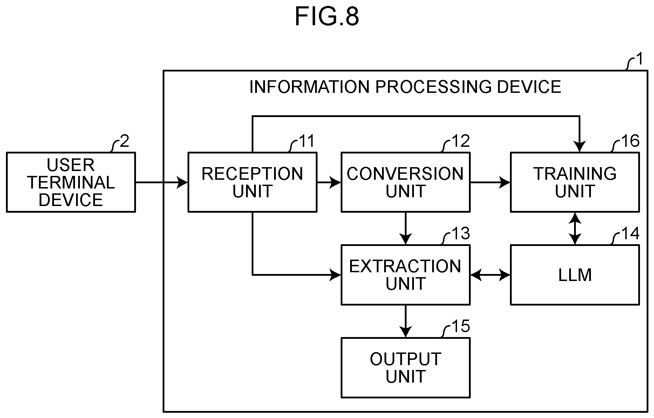

FIG. 8 is a block diagram of an information processing device according to the modification. The information processing device 1 according to the present embodiment further includes a training unit 16. The information processing device 1 according to the present modification operates in the training phase and the operation phase.

In the training phase, the training unit 16 trains the LLM 14 as follows. For example, the training unit 16 receives a layout expression document obtained by converting a reference PDF document of the input/output case from the conversion unit 12. In addition, the training unit 16 receives an extraction result of the input/output case from the reception unit 11.

Then, the training unit 16 inputs the layout expression document obtained by converting the reference PDF document into the LLM 14, compares the output extraction result with the extraction result of the input/output case, and updates the parameter of the LLM 14 so as to minimize the error. Here, the training unit 16 trains the LLM 14 using a large number of input/output cases to generate the trained LLM 14.

As described above, the training unit 16 according to the modification trains the LLM 14 that is a machine learning model based on the third document and the extraction result from the third document. Here, in the present modification, for the sake of convenience, training is performed using the input/output case of the case of the first embodiment, but the training unit 16 can train the LLM 14 using other data as long as it is a combination of a layout expression document and an extraction result thereof.

In the operation phase, the extraction unit 13 inputs the task description and the layout expression document 110 to the trained LLM 14. In this case, the extraction unit 13 can choose not to input the input/output case to the LLM 14. Then, the extraction unit 13 acquires an extraction result of the character information output from the LLM 14. In this manner, the extraction unit 13 causes the LLM 14, which is a trained machine learning model subjected to training, to extract predetermined character information.

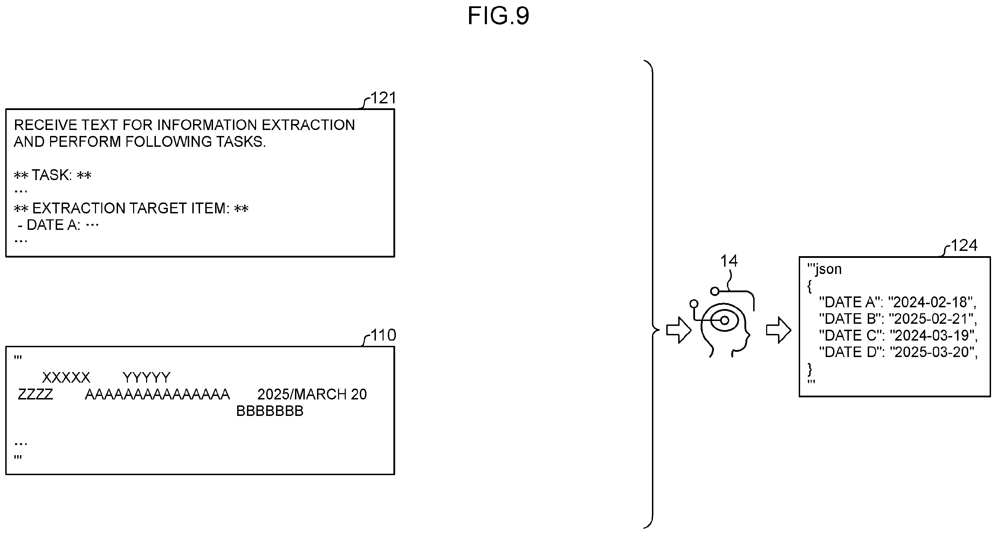

The LLM 14 is trained by the training unit 16 in the training phase. FIG. 9 is a diagram illustrating an outline of a character information extraction process by the LLM according to the modification. The trained LLM 14 trained by the training unit 16 receives, for example, the task description 121 and a layout expression document 110 from the extraction unit 13 in the operation phase. Then, the LLM 14 outputs the extraction result 124 obtained by extracting the character information from the layout expression document 110 according to the task description 121.

As described above, the information processing device 1 according to the present modification extracts character information using the trained LLM 14 generated by training the LLM 14 so as to perform character extraction using a layout expression document. Even in this case, the LLM 14 can easily extract character information defined by the description position. Therefore, the information processing device 1 improves the accuracy for extracting information.

Note that, in the case of the first embodiment in which the LLM 14 is caused to perform extraction with reference to the input/output case without performing training, the information processing device 1 can suppress the processing cost and is easy to introduce. On the other hand, in the case of the modification in which the LLM 14 is trained to extract the character information and then is caused to perform extraction, although the processing cost is increased as compared with the case of the first embodiment, the information processing device 1 can improve the inference accuracy of information extraction by performing the training using many input/output cases.

### (b) Second Embodiment

Next, the second embodiment will be described. The information processing device 1 according to the present embodiment is represented by the block diagram of FIG. 1. The information processing device 1 according to the present embodiment causes the LLM 14 to extract character information using a regular expression that is information representing a pattern of a character string. In other words, the regular expression is information in which the character string represented by the regular expression can be extracted from the document on a rule basis. In the following description, description of operations similar to those of the first embodiment may be omitted.

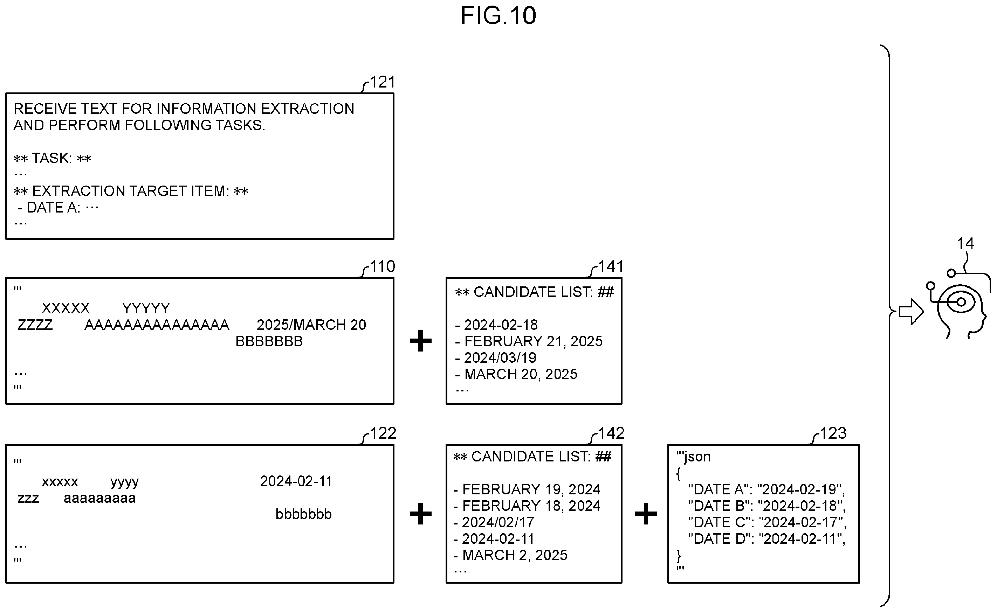

FIG. 10 is a diagram illustrating an example of information input to the LLM according to the second embodiment. Here, a case where the information processing device 1 extracts character information using the information illustrated in FIG. 10 will be described.

The reception unit 11 receives the PDF document 100, the task description 121, and the input/output case from the user terminal device 2. Further, the reception unit 11 receives, from the user terminal device 2, a candidate list 141 in which the regular expression for character information extracted from the PDF document 100 is registered. Further, the reception unit 11 receives, from the user terminal device 2, a candidate list 142 in which the regular expression for the character information extracted from each of the input/output cases is registered.

For example, the candidate list 141 is used in a case of extracting a date, and a regular expression of the date representing various patterns of character strings indicating the date is registered. Examples of the regular expression of the date include, for example, 2024-02-18, February 21, 2025, 2024/03/19, or the like. In this manner, the reception unit 11 acquires the information about the regular expression of the predetermined character information.

The reception unit 11 outputs the PDF document 100 and the reference PDF document of the input/output case to the conversion unit 12. Furthermore, the reception unit 11 outputs the task description 121, the PDF document 100, the extraction result 123 of the input/output case, and the candidate lists 141 and 142 to the extraction unit 13.

The extraction unit 13 receives the task description 121, the extraction result 123 of the input/output case, and the candidate lists 141 and 142 from the reception unit 11. Furthermore, the extraction unit 13 receives the layout expression document 110 and the layout expression document 122 obtained by converting the reference PDF document from the conversion unit 12.

Then, the extraction unit 13 refers to the candidate list 141 and extracts, from the layout expression document 110, character information corresponding to the pattern of the character string matching the regular expression included in the candidate list 141. Next, the extraction unit 13 corrects the extracted character information to a pattern indicated by the regular expression, and generates a character string corrected to the regular expression. Then, the extraction unit 13 replaces the character information of the layout expression document 110 with the character information corrected to the pattern indicated by the regular expression, and combines the character information corrected to the regular expression with the layout expression document 110.

For example, the character information 102 of the date B in the PDF document 100 of FIG. 3 extends over two lines. In this case, the character information 102 is divided into different lines by the line feed also in the layout expression document 110 after conversion by the conversion unit 12. It is relatively difficult for the LLM 14 to grasp the character string divided into different lines as one character string.

Therefore, for example, the extraction unit 13 extracts the character information 102 divided into two lines from the layout expression document 110 based on March 2, 2025, which is a regular expression registered in the candidate list 141, and corrects the character information 102 to a date represented by a character string in one line. Thereafter, the extraction unit 13 corrects the character information 102 divided into two lines in the layout expression document 110 to the character information 102 corrected to a character string in one line.

Then, the extraction unit 13 inputs the task description 121, the layout expression document 110 in which the character information is corrected to the regular expression, the layout expression document 122, the candidate list 142, and the extraction result 123 to the LLM 14. Thereafter, the extraction unit 13 acquires an extraction result from the layout expression document 110 in which the character information is corrected to the regular expression according to the extraction condition designated in the task description 121. In this manner, the extraction unit 13 rewrites the character information corresponding to the regular expression in the character information included in the PDF document 100, which is the first document, into the regular expression.

The LLM 14 receives the task description 121 including an extraction condition of character information from the PDF document 100. Further, the LLM 14 receives the layout expression document 110 in which the character information is corrected to the regular expression. Further, the LLM 14 receives the layout expression document 122 of the input/output case, the candidate list 142, and the extraction result 123.

Then, the LLM 14 extracts the character information from the layout expression document 110 according to the task description 121 with reference to the layout expression document 122, the candidate list 142, and the extraction result 123.

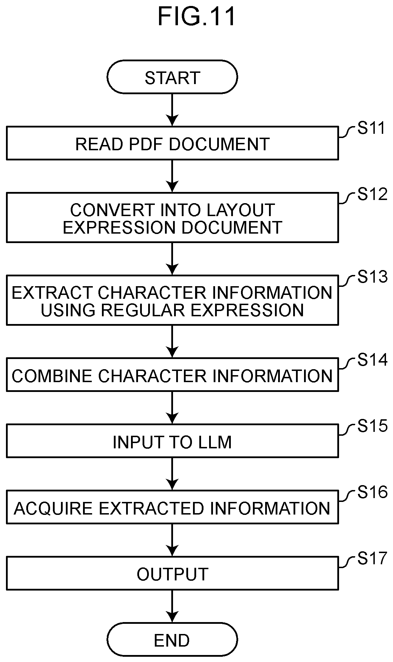

FIG. 11 is a flowchart of the character string extraction process by the information processing device according to the second embodiment. Next, a flow of the character string extraction process by the information processing device 1 according to the second embodiment will be described with reference to FIG. 11. Here, the information processing device 1 extracts character information corresponding to the candidate list 141 from the PDF document 100 according to the task description 121 with reference to the layout expression document 122, the candidate list 142, and the extraction result 123 illustrated in FIG. 10.

The reception unit 11 receives the PDF document 100 from the user terminal device 2 and outputs the PDF document 100 to the conversion unit 12. At this time, the reception unit 11 also receives the task description 121 and the input/output case from the user terminal device 2. The conversion unit 12 reads the PDF document 100 input from the reception unit 11 (step S11).

The conversion unit 12 converts the read PDF document 100 into the layout expression document 110 including character information and layout information about each piece of the character information of the PDF document 100 (step S12). Further, the conversion unit 12 converts the reference PDF document of the input/output case into the layout expression document 122.

The extraction unit 13 refers to the candidate list 141 and extracts the character information using the regular expression included in the candidate list 141 with respect to the layout expression document 110 (step S13).

Next, the extraction unit 13 corrects the extracted character information to a pattern indicated by the regular expression and combines the character information with the layout expression document 110 (step S14).

Next, the extraction unit 13 inputs the task description 121, the layout expression document 110 in which the character information is corrected to the regular expression, the layout expression document 122, the candidate list 142, and the extraction result 123 to the LLM 14 (step S15).

Thereafter, the extraction unit 13 acquires character information extracted from the layout expression document 110 (step S16).

The output unit 15 outputs, to the user terminal device 2, the extraction result including the character information extracted from the layout expression document 110 (step S17).

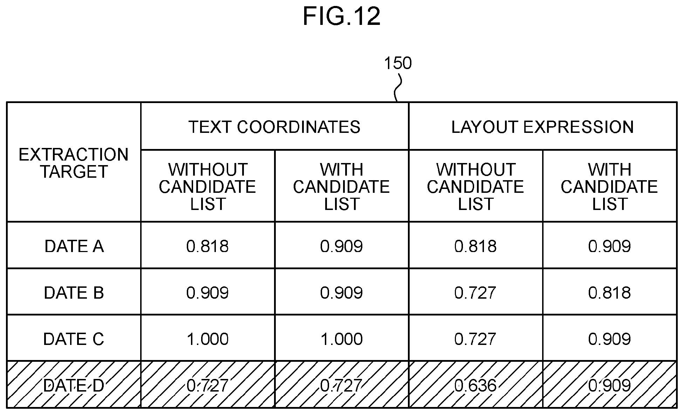

FIG. 12 is a diagram illustrating a comparative example of the extraction accuracy for extracting character information by the information processing device according to the second embodiment. Table 150 illustrates a comparison of extraction accuracy by the extraction process of extracting character information 101 to 104 of the dates A to D from the PDF document 100. The text coordinates indicate a process of extracting character information in a case where information about coordinates of a frame surrounding the character information is assigned to each piece of character information included in a text group extracted from the PDF document.

As illustrated in Table 150, the information processing device 1 extracts character information using the candidate list 141, thereby improving extraction accuracy, as compared with a case where character information is extracted without using the candidate list 141. Then, in a case where the character information is extracted using the candidate list 141, the information processing device 1 improves the extraction accuracy as compared with a case where the text coordinates are used.

Here, in the present embodiment, the case where the date is extracted is described, but the information processing device 1 can also extract another information as long as the information can be represented by a regular expression. For example, in the case of a number having a predetermined number of digits, the information processing device 1 can use the number having the number of digits as the regular expression, and in the case of an amount of money, "XX yen", "$YY", or the like can be used as the regular expression.

As described above, the information processing device 1 according to the present embodiment generates the layout expression document in which in the document, character information and the position of the character information are represented by plain text using a space and a line feed. Further, the information processing device 1 inputs the layout expression document 110 in which the character information is corrected by the regular expression registered in the candidate list 141 to the LLM, and causes the LLM 14 to extract predetermined character information. At this time, the information processing device 1 adds the candidate list 142 to the input/output case as information to be referred to by the LLM 14. As a result, the information processing device 1 can further improve the inference accuracy of information extraction.

### Hardware configuration

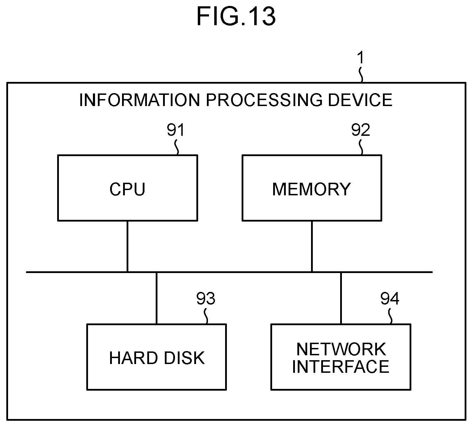

FIG. 13 is a hardware configuration diagram of the information processing device. Next, an example of a hardware configuration for implementing each function of the information processing device 1 will be described with reference to FIG. 13.

As illustrated in FIG. 13, the information processing device 1 includes, for example, a central processing unit (CPU) 91, a memory 92, a hard disk 93, and a network interface 94. The CPU 91 is connected to the memory 92, the hard disk 93, and the network interface 94 via a bus. Here, although one CPU 91 is illustrated in FIG. 13, a plurality of processors may be used.

The network interface 94 is an interface for communication between the information processing device 1 and an external device. The network interface 94 relays communication between the user terminal device 2 and the CPU 91, for example.

The hard disk 93 is an auxiliary storage device. The hard disk 93 may store the LLM 14. In addition, the hard disk 93 stores various programs including programs for implementing the functions of the reception unit 11, the conversion unit 12, the extraction unit 13, the LLM 14, and the output unit 15 illustrated in FIG. 1.

The memory 92 is a main storage device. For example, a dynamic random access memory (DRAM) can be used as the memory 92.

The CPU 91 reads various programs from the hard disk 93, develops the programs in the memory 92, and executes the programs. As a result, the CPU 91 implements the functions of the reception unit 11, the conversion unit 12, the extraction unit 13, the LLM 14, and the output unit 15 illustrated in FIG. 1. Furthermore, the reception unit 11, the conversion unit 12, the extraction unit 13, the LLM 14, and the output unit 15 may be implemented by cooperation of a graphics processing unit (GPU) (not illustrated) in addition to the CPU 91.

In an aspect, the present invention can improve the accuracy for extracting information.

## Claims

1. An information processing program for causing a computer to execute a process comprising:
acquiring a first document;
generating a second document in which character information and a position of each piece of the character information included in the first document are represented by a plain text including a blank and a line feed; and
inputting the generated second document to a machine learning model, and causing the machine learning model to extract predetermined character information.

2. The information processing program according to claim 1, wherein the generating the second document includes generating the second document so that an interval between character information in a first direction is indicated by a blank and an interval in a second direction orthogonal to the first direction is indicated by a line feed.

3. The information processing program according to claim 1, wherein the extracting the predetermined character information includes inputting an input/output case including a third document and an extraction result from the third document together with the second document, and causes the machine learning model to perform inference.

4. The information processing program according to claim 1 for causing the computer to further execute:
training the machine learning model based on a third document and an extraction result from the third document, wherein
the extracting the predetermined character information includes causing the trained machine learning model on which the training is executed to extract the predetermined character information.

5. The information processing program according to claim 1, wherein
the acquiring includes acquiring information about a regular expression of the predetermined character information, and
the generating the second document includes rewriting character information corresponding to the regular expression in character information included in the first document into the regular expression.

6. An information processing method carried out by a computer, comprising:
acquiring a first document;
generating a second document in which character information and a position of each piece of the character information included in the first document are represented by a plain text including a blank and a line feed; and
inputting the generated second document to a machine learning model, and causing the machine learning model to extract predetermined character information.

7. An information processing device comprising:
a reception unit configured to acquire a first document;
a conversion unit configured to generate a second document in which character information and a position of each piece of the character information are represented by a plain text including a blank and a line feed, the character information and the position of the character information being included in the first document acquired by the reception unit; and
an extraction unit configured to input the generated second document generated by the conversion unit to a machine learning model, and cause the machine learning model to extract predetermined character information.
